# EUROPEAN PATENT SPECIFICATION

(11) **EP 0 363 150 B1**
(45) Date of publication and mention of the grant of the patent: **01.06.1994**
(21) Application number: 89310096.6
(22) Date of filing: 03.10.1989
(51) Int. Cl.: B29D 11/00, C03B 11/08

(54) **A lens molding method**
Verfahren zur Herstellung von Linsen
Procédé pour le moulage de lentilles

(30) Priority: 07.10.1988 JP 254018/88; 24.03.1989 JP 72411/89
(43) Date of publication of application: 11.04.1990
(73) Proprietor: MATSUSHITA ELECTRIC INDUSTRIAL CO., LTD., Kadoma-shi, Osaka-fu, 571 (JP)
(72) Inventor: Murata, Jun, Katano-shi Osaka-fu, 576 (JP); Sunohara, Masaaki, Nishinomiya-shi Hyougo-ken, 622 (JP); Kimoto, Takayuki, Neyagawa-shi Osaka-fu, 572 (JP)
(74) Representative: Crawford, Andrew Birkby

(56) References cited:
- DE-A- 3 248 266
- FR-A- 1 080 678
- FR-A- 2 510 768
- GB-A- 778 027
- GB-A- 1 126 917
- US-A- 2 332 674
- US-A- 4 629 489
- PATENT ABSTRACTS OF JAPAN, vol. 10, no. 120 [343], 6th May 1986;& JP-A-60 246 231 (IWAMURA RIYOUJI et al.)

## Description

The present invention relates to a press molding method for a lens, particularly to a molding method for a lens excellent in shape and surface accuracy.

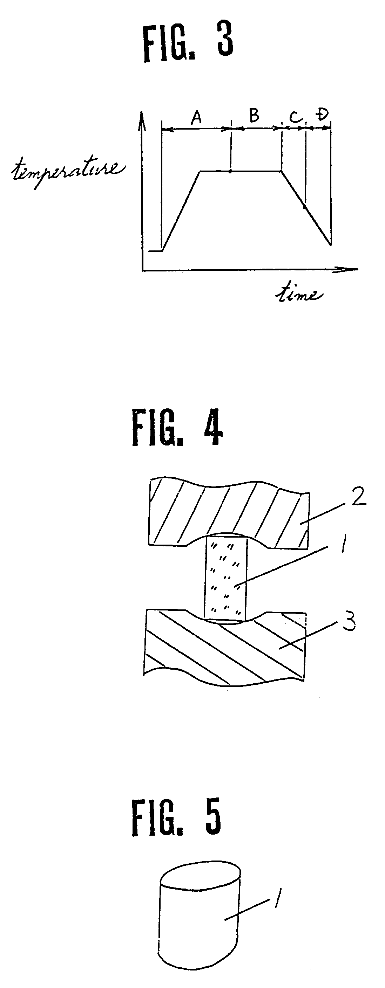

A conventional press molding method for a lens will be explained with reference to Figs. 4 - 7 for a glass case. In a case of making a glass lens by press molding, generally a lens material is cut into a specified size, preheated up to a temperature near a glass transition point, supplied between upper and lower molds which are formed so that the cavity, when closed, forms the same shape as that of a finished lens, and press-molded under a specified temperature and a specified pressure.

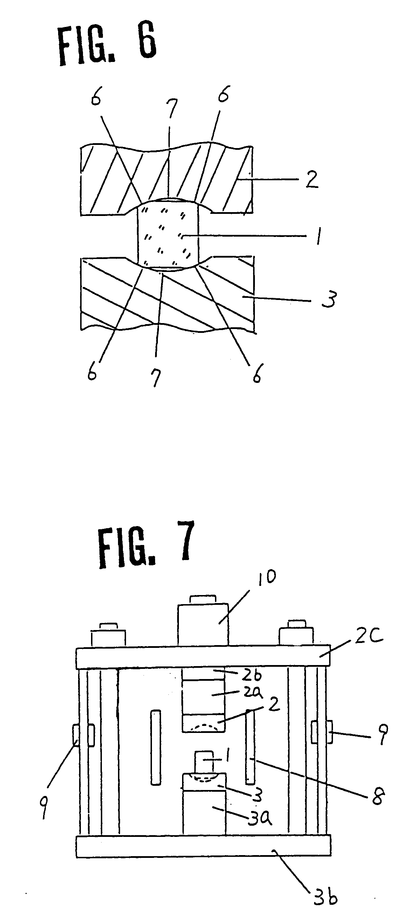

Shape of the lens material 1 is preferably as simple as possible in view of manufacturing steps or material cutting, and for example, as shown in Fig. 5, it may be a cylindrical body cut with a specified width from a bar material.

However, when such a material is molded, since a corner portion 6 of the material shown in Fig. 6 is deformed at the beginning and fits to an upper mold 2 and a lower mold 3, resulting in generation of a closed space 7. Once the closed space is generated, the space continues to exist till the completion of the molding, and a faulty lens is obtained because the metal mold surface is not accurately transferred to the material. Using Fig. 7, a conventional method preventing such a faulty product is explained. The lower mold 3 is fixed to a base 3b through a connecting rod 3a, and the upper mold 2 is fixed to a piston rod 2b through a connecting rod 2a. The material is heated to a molding temperature by a heater 8. At the time of attaining a specified molding temperature, the upper mold 2 is lowered by a piston 9 and contacts the material. After that, up-and-down oscillation pressing is made by the upper mold by, for example, using a servo-pulser 10. For example, 90% of a pressing stroke is covered by the oscillation pressing and remaining 10% of the stroke is covered by a regular pressing. When total pressing stroke was attained, power application is stopped, and when the temperature is lowered to a specified temperature, the cavity is opened. Then, a lens is taken out after cooled. It is disclosed that when 90% of the total pressing stroke is oscillation-pressed during the above consecutive molding processes, a non-contact portion conventionally generated is eliminated (for example, Japanese Patent Publication No. 60-246231). In the conventional molding method, there are problems that since close contact and separation are repeated between the upper mold determining a lens shape and a lens material during a molding step, that is, during a heating & pressing step, at that time, air is swallowed to generate bubbles in the softened material. In addition, owing to behaviour of the above upper mold, position matching with the lower mold is very difficult and guarantee of an inclination of both sides of a molded lens is very difficult. Besides, owing to behaviour of the upper mold described above, since the temperature of the upper mold becomes non-uniform, temperature distribution of the lens material becomes non-uniform and a large deformation is generated in the formed lens.

The present invention provides a lens molding method for press-molding a body of lens material placed in a space between mold surfaces of a pair of upper and lower molds by applying a molding pressure to the pair of molds to produce a lens, comprising:
a preheating step for heating the body of lens material placed in the space between the mold surfaces of the pair of molds until the temperature of said body rises up to a first predetermined temperature;
a heating and pressing step for applying the molding pressure to the pair of molds having the body of lens material placed therebetween while keeping the temperature of said body at the first predetermined temperature thereby to mold said body into a lens-form body;
a cooling and pressing step for applying the molding pressure to the pair of molds having the lens-form body placed therebetween while cooling the lens-form body until the temperature of the lens-form body lowers down to a second predetermined temperature to obtain a final lens product; and
a taking out step for taking out the final lens product from the space between the pair of molds after the product has further cooled down,
characterized in that the molding pressure is reduced or made zero at least once at a predetermined timing during at least one of the heating and pressing step and the cooling and pressing step so that a compressed air pressure generated inside a space between each of the mold surfaces of the pair of molds and the body of lens material is released by its own pressure from the space between each of the mold surfaces of the pair of molds and the body of lens material.

Such a lens molding method may use a cheap glass material and a press molding, to obtain a high precision lens.

In this method, the molding can be conducted without generating an non-contact portion between lens shape transfer surface on a mold and the lens material, axis discrepancy between the upper and lower molds can be prevented, and uneven lens shrinkage during the molding can be eliminated.

During the molding, by once reducing or stopping pressure application during the heating and pressing step or the cooling and pressing step to make the molding pressure closer or equal to normal pressure, defective molding due to entrapped air can be eliminated and a lens excellent in shape and surface accuracy can be obtained. In addition, since molding is possible in the stage that close contacts of the upper and lower molds with the lens material is always kept till completion of the cooling step, the accuracy of each of the upper and lower molds can be transferred to the lens material as it is. Besides, the axis discrepancy can be avoided. Further, an inclination of both sides of the lens can easily be guaranteed by a molding stage and a pressing stage or the molds and a barrel mold. As the molds are kept in contact with the lens material, temperature distribution of heat transferring from the molds to the lens material becomes uniform. As deformation of the lens material during the molding and uneven shrinkage of the material during cooling are eliminated, a lens good in shape accuracy can be obtained. On the other hand, even if the metal molds are separated from the lens material desired lens performance can be obtained when the molding pressure is made zero or reduced, by making the molding pressure zero or reduced during a cooling and pressing step. If coefficient of linear expansion of the lens material is 50 x 10⁻⁷/deg at 100 - 300°C, slight discrepancy between the mold transfer surface shape and lens material shape can be eliminated during the cooling and pressing step.

Features and advantages of the present invention will become apparent from the following description of an embodiment given by way of example with reference to the accompanying drawings, in which:
Figs. 1 and 2 are sectional views of molding devices for realizing a molding method of the present invention.
Fig. 3 shows a molding profile.
Figs. 4 - 7 show sectional views of conventional molding devices and a lens material.
Fig. 8 shows a sectional view of molding molds and a lens material.

### Description of the Preferred Embodiments

### Embodiment 1

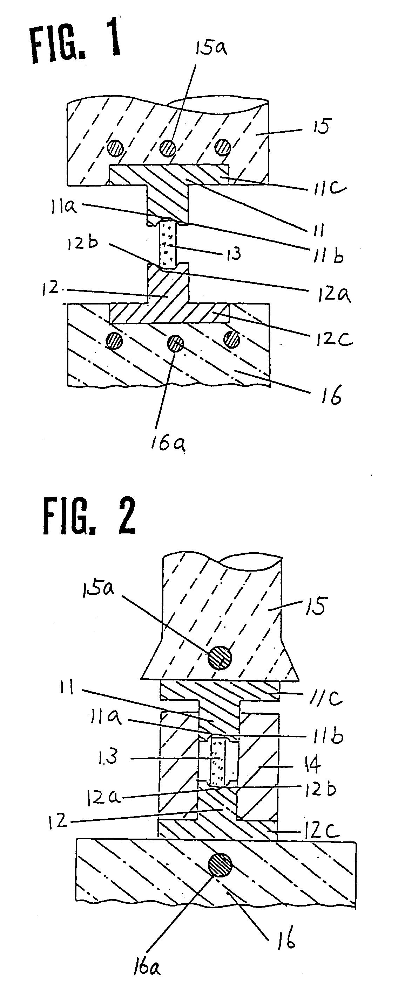

In Fig. 1, an upper mold 11 is engaged with a pressing stage 15 counter-sunk to scale of an upper mold flange 11c and fixed by screws, etc. A lower mold 12 is engaged with a molding stage 16 counter-sunk to scale of a lower mold flange 12c and fixed by screws, etc. In addition, the pressing stage 15 and the molding stage 16 are accurately adjusted to a position in which axis centers of the upper mold and the lower mold coincide with each other so that the axis centers do not shift from each other at the time of up-and-down shift of the upper mold 11. In the pressing stage 15 and the molding stage 16, heating sources 15a and 16a are built. In addition, pressure is applied to the pressing stage 15 by, for example, a hydraulic pump, etc., so that precise pressure is transmitted to the upper mold. The upper mold can be stopped at an optional position. The pressure can be reduced to an arbitrary pressure or made zero during the molding.

Using the molding device composed as mentioned above, a glass material molding method is explained. A general molding profile is shown in Fig. 3. In Fig. 3, the axis of abscissas and the axis of ordinates denote time and temperature, respectively. Roughly, the molding process comprises a pre-heating step, a heating & pressing step, a cooling & pressing step and a cooling step. In the preheating step, temperatures of the molds and the lens material is raised to temperatures which enable the molding. This is called a preheating step (A). When temperature distribution of the molds becomes uniform, the lens material is deformed to an optional thickness by applying pressure on the molds. This is called a heating & pressing step or a soaking & pressing step (B). After the lens material is deformed to the optional thickness, the material is cooled under conditions that the pressing force is kept as it is. This is called a cooling & pressing step (C). After the cooling & pressing step is continued up to temperatures enabling deformation of the pressed lens material, the pressing force is released to make the pressure zero. Then, cooling is further continued. This is called a cooling step (D). After the temperatures become normal, the molds are opened and the lens is taken out. An ordinary molding process is conducted as mentioned above.

Adopting the above fundamental process, a molding method of the invention solves said problems. That is, the lens material is of a cylindrical body shown in Fig. 5 and its end surface is mirror-surface. In this embodiment, an optical glass SF-8 (glass transition point; 420°C, coefficient of linear expansion; 90 x 10⁻⁷/deg at 100 - 300°C) cylindrical body with diameter 5 mm x length 7 mm, is used. After this lens material is vertically placed so that the end surface faces the mold transfer surface, the transfer surface 12a of the lower mold 12, the pressing stage lowers and the transfer surface 11a of the upper mold 11 linecontacts the glass material 13 at the periphery of the glass material. At this instant, dead load of the pressing stage is applied on the lens material. Under these conditions, heating sources built in the pressing stage 15 and the molding stage 16 is energized and heating is conducted till the temperature of the lens material becomes 530°C. Said pre-heating step is up to here. When the temperature of the lens material becomes 530°C, the viscosity of the glass material becomes 10¹⁰ poise.

Then, pressure is applied to the pressing stage by a hydraulic pump, and the upper mold 11 starts to press the lens material. That is, from this instant, the heating & pressing step starts. 2 kg/mm² or more is favored for the pressure at this time. During the heating & pressing step, the molding pressure is once made zero after a specified time elapse, and by raising the pressing stage 15, the transfer surface 11a of the upper mold 11 is separated from the lens material. When said pressure becomes zero, positive pressure inside each of spaces 11b and 12b formed by the mold transfer surface 11a, 12a and the end surface of the lens material returns to normal pressure. Then the pressing stage 15 is again lowered, and close contacts of the transfer surface 11b of the mold 11 and the transfer surface 12b of the mold 12 with the lens material is made. At this time, volumes of spaces 11b and 12b encircled by the transfer surfaces 11a, 12a and the end surfaces of the lens material become fairly smaller than those of the spaces 11b and 12b immediately after the start of the heating & pressing step. Pressure is again applied to the pressing stage by the hydraulic pump, and the upper mold starts to press the lens material. When the upper mold is lowered to a specified position, the pressing stage 15 stops. Said heating & pressing step is up to here. At this time, the viscosity of the lens material becomes 10⁹ poise. At the completion of the heating and pressing step, on the lens material, there is a portion in which the mold transfer surface is not completely transferred to the lens material and a closed space is generated and thus the internal pressure becomes high due to the molding pressure.

At the completion of the heating & pressing step, the molding pressure is made zero, and the pressing stage 15 is raised so that the transfer surface 11a of the upper mold 11 is separated from the lens material. When said pressure was made zero, positive pressure inside each of the spaces 11b and 12b encircled by the mold transfer surfaces 11a and 12a returns to normal pressure. Then, the pressing stage 15 is again lowered so that the transfer surface 11b of the upper mold 11 and the transfer surface 12b of the lower mold 12 contact the lens material. At this instant, the volumes of the spaces 11b and 12b encircled by the transfer surfaces 11a and 12a and the end surfaces of the lens material become further smaller than those of the spaces 11b and 12b at the completion of the heating & pressing step, or become almost zero.

Then the cooling & pressing step follows. That is, energization of the heating sources built in the pressing stage 15 and the molding stage 16 is stopped, and supply of pressure of 2 kg/mm² or more from the pressure pump is continued to the pressing stage, as in the case of the heating & pressing step. During the cooling & pressing step, after a specified time elapse, the molding pressure is once made zero, and by raising the pressing stage, the transfer surface 11a of the upper mold 11 is separated from the lens material. Positive pressure existing just before said pressure was made zero, inside the spaces 11b and 12b encircled by the mold transfer surfaces 11a and 12a and the end surfaces of the lens material, returns to normal pressure. Then, the pressing stage 15 is again lowered so that close contact between the transfer surfaces 11b and 12b of the molds 11 and 12 and the lens material are made. At this time, the transfer surfaces 11a and 12a are completely transferred to the lens material, and the spaces 11b and 12b encircled by the end surfaces of the lens material just before the start of the cooling & pressing step, become almost zero. In addition, even if the transfer surface 11a of the upper mold 11 is separated from the lens material so that the pressure is released during the cooling and pressing step in which a stage of viscosity slightly higher than that during the heating step exists, the lens surface does not suffer from the effect of swallowed bubbles.

Then, after performing the cooling & pressing down to 430°C, pressure supply is stopped to again make the molding pressure zero. At this instant, close contact between the lens material and the molds is kept.

Then the cooling step follows. That is, a state in which the lens material close contacts with the molds, is left as it is till the temperature of the lens inside the molds becomes normal, and then the pressing stage is raised to open the molds and take out the lens. The lens material end surface concave rarely remaining during the cooling & pressing step, further becomes smaller and the mold surface is almost completely transferred due to the flow following the glass material shrinkage.
Besides, if the coefficient of linear expansion of the lens material is 50 x 10⁻⁷/deg or more, the flow due to the glass material shrinkage becomes further large, and the concave on the lens surface easily becomes zero. During the molding, by imposing, on the molds, the pressure necessary to generate minimum compression air pressure necessary for releasing the pressure inside the space encircled by the mold transfer surface and the lens material end surface can be made small.

In this embodiment, the molding was performed by the pressure of 2 kg/mm² or more. In the embodiment, the molding pressure was once made zero during the heating & pressing step, at the completion of the heating & pressing step and during the cooling and pressing step. However, since only by doing the pressure reduction during the heating & pressing step, at the completion of the heating & pressing step and during the cooling & pressing step, the pressure inside the spaces 11b and 12b returns to normal pressure, selection only of the pressure reduction is possible. In addition, if whole the close contact between the upper mold 11 and the lens material is kept as it is, the molding pressure is made zero or reduced, it is desirable in view of heat distribution of the lens material and prevention of swallowed air. As shown in this embodiment, if separation of the upper mold 11 from the lens material is made when the molding pressure is made zero, air is sometimes swallowed to generate small concave on the lens material surface, especially on the surface good transferring the mold transfer surface. However, by making the molding pressure zero during the cooling & pressing step, the concave is competely eliminated or becomes of smaller size not affecting the lens performance.

In this embodiment, the pressure was once made zero after a specified time elapse, during the heating & pressing step, at the completion of the heating & pressing step and during the cooling & pressing step, but it is more effective to perform zero pressure operation twice or more depending on the lens shape and the dimension.

In addition, pressure release timing can be determined according to the shrinkage quantity at the cooling & pressing step. Further, in this embodiment, the lens material and the molds were kept in close contact conditions, but the cooling step can follow under the conditions in which the upper mold 11 and the lens are separated.

### Embodiment 2

As shown in Fig. 2, the molding device relating to the present invention molding method has the barrel mold 14 in which adjustments is conducted to optional height so that axis discrepancy between the upper mold 11 and the lower mold 12 is eliminated and specified lens thickness can be obtained, and has the lens material 13 supplied into the space encircled by said upper mold, lower mold and barrel mold. The lens material is, as shown in Fig. 5, cylindrical with mirror end surfaces. This material is supplied into the molds so that the both end surfaces contact the transfer surfaces of the upper and lower molds. In the pressing stage 15 a heating source 15a is built, and for example, the pressing force is applied by the hydraulic pump, etc. to the pressing stage. Besides, the pressing stage is composed so that the pressure is optionally reduced or made zero during the molding. In the molding stage 16 a heating source 16b is built. The molding stage 16 is fixed.

Using the molding device composed as in the above, the glass material molding method is explained. The material is cylindrical with diameter 8 mm x length 10 mm, made of optical glass SF-8 (glass transition point; 420°C, coefficient of linear expansion 90 x 10⁷/deg at 100 - 300°C). This material is vertically supplied to the transfer surface 12a of the lower mold 12, and then the upper mold 11 is inserted to the barrel mold 14 to contact the lens material. After that, the heating source is energized to heat the lens material up to 530°C (a pre-heating step). When the temperature of the lens material become 530°C, the viscosity of the lens material becomes 10¹⁰ poise.

Then the pressure is supplied to the pressing stage and the upper mold 11 starts to press the material (a heating & pressing step) 2 kg/mm² or more is preferable for the pressure at this instant. The following stroke is named total heating & pressing stroke: the distance that a gap is completely eliminated during the heating & pressing and contacted, which generates between the upper mold 11 and the barrel mold 14 when the lens material is supplied into the space encircled by the molds composed of the upper mold and the lower mold, the barrel mold positioning the upper and the lower molds and said upper, lower and barrel molds. During the heating & pressing step, after a specified time elapse, the molding pressure is once made zero and the pressing stage 15 is raised to be separated from the upper mold flange 11c. Just before said pressure is made zero, positive pressure inside each of the spaces 11b and 12b encircled by the mold transfer surfaces 11a, 12a and the lens material end surfaces returns to normal pressure. Then, the pressing stage 15 is again lowered to be in close contact with the flange of the metal mold 11 with the stage. Also when the molding pressure is made zero, the transfer surface 11b of the upper mold 11 and the transfer surface 12b of the lower mold 12 are left close contacted with the lens material. In this instant, volumes of the spaces 11b and 12b become much smaller than those of the spaces 11b and 12b immediately after the start of the heating & pressing step. The pressure is again supplied to the pressing stage by the hydraulic pump, and the upper mold 11 starts to press the lens material. The heating & pressing step is completed when the press has been made through the total heating & pressing stroke. At this instant, the viscosity becomes 10⁹ poise. At the time when the press has been made through the total heating & pressing stroke, that is, when the heating & pressing step has been completed, there is a portion in which the mold transfer surface is not completely transferred to the lens material. After a specified time elapse, the molding pressure is once made zero, and the pressing stage 15 is raised to be separated from the upper mold flange 11c. Just before said pressure is made zero, the positive pressure inside the spaces 11b and 12b returns to the normal pressure. Then the pressing stage 15 is again lowered, and the flange of the mold 11 and the pressing stage 15 are closely contacted. Also when the molding pressure is made zero, the transfer surface 11b of the upper mold 11 and the transfer surface of the lower mold 12 are left close in contact with the lens material. At this instant, the volumes of the spaces 11b and 12b become smaller than those of the spaces 11b and 12b after the completion of the heating & pressing step.

Next, a cooling & pressing step follows. During the cooling & pressing step, after a specified time elapse, the molding pressure is once made zero, and the pressing stage 15 is raised to be separated from the upper mold flange 11c. Just before said pressure is made zero, the positive pressure inside the spaces 11b and 12b returns to the normal pressure. Then, the pressing stage 15 is again lowered to be in contact with the metal mold flange 11c: At this instant, the upper mold flange 11c and the end surface of the barrel mold are left closely contacted. At this time, the volumes of the spaces 11b and 12b become much smaller than those of the spaces 11b and 12b just before the start of the cooling & pressing step or become almost zero. Then the cooling & pressing is performed down to 430°C. Even if, in a rare case, a small concave remains on the lens material surface at the completion of the cooling & pressing step, due to the flow from the lens material shrinkage in the cooling step, the spaces 11b and 12b are completely eliminated.

In addition, if the coefficient of linear expansion of the lens material is 50 x 10⁻⁷/deg or more, since the flow quantity of the lens material becomes larger, the concave on the lens surface easily becomes zero. After that, the pressure supply is stopped and the molding pressure is made zero. Then, when the temperature of the lens inside the molds becomes the room temperature, the molds are opened and the lens is taken out. In this embodiment, since the pressing stage and the upper mold flange are not fixed and the molding is made under conditions in which the molds and the material are in close contact with each other, the transfer characteristics are extremely improved. By applying, during the molding on the molds, the pressing force necessary for generating, inside the space encircled by the mold transfer surface and the lens material end surface, minimum compressed air pressure necessary for releasing the pressure inside the space encircled by the mold transfer surface and the lens material end surface can be made small.

In this embodiment, the molding pressure of 2 kg/mm² or more was used. In the embodiment, the molding pressure was made zero during the heating & pressing step, at the completion of the heating & pressing step and the cooling & pressing step. However, since only by reducing the pressure depending on the scale of the lens material, the pressure inside the spaces 11b and 12b returns to the normal pressure, only selection of the pressure reduction is available. In addition, as shown in Fig. 2, it is unnecessary for the barrel mold adjusting the lens thickness to contact the upper and lower molds. The following method can be selected: by incorporating a ring-like barrel mold or a block-like spacer outside the upper and lower mold flanges 11c and 12c which are in close contact with the pressing stage 15 and the molding stage 16, the gap between the pressing stage 15 and the molding stage 16 is adjusted. Besides, even if a mold transfer method in which the cooling & pressing step, the cooling step, etc. are respectively transferred into a separate stage, is adopted, a lens with completely the same performance can be obtained.

### Embodiment 3

Construction of the molding device is the same as that of Embodiment 2. Using the molding device, the glass material molding method is explained. The material is a cylindrical optical glass SF-8 (glass transition point; 420°C, coefficient of linear expansion; 90 x 10⁷/deg at 100 - 300°C) body with diameter 8 mm x length 10 mm. This material is vertically supplied to the transfer surface of the lower mold 12, and then the upper mold 11 is inserted into the barrel mold 14 to make it in contact with the lens material. After that, the heating source is energized to raise the temperature up to 530°C (a pre-heating step). When the temperature of the lens material becomes 530°C, the viscosity of the lens material becomes 10¹⁰ poise. Then, pressure is applied to the pressing stage and the upper mold starts to press the material (a heating & pressing step). The pressure at this time is preferably 2 kg/mm² or more. The following stroke is named total heating & pressing stroke: the distance that a gap is completely eliminated during the heating & pressing and contacted, which generates between the upper mold 11 and the barrel mold 14 when the lens material is supplied into the space encircled by the molding molds composed of the upper and lower molds, the barrel mold positioning the upper and lower molds and said upper, lower and barrel molds. The total heating & pressing stroke in this embodiment is 5 mm. When the pressing is made up to 2.5 mm, the molding pressure is once made zero, and the pressing stage 15 is raised to be separated from the upper mold flange 11c. Just before said pressure is made zero, the positive pressure inside the spaces 11b and 12b encircled by the mold transfer surfaces 11a, 12a and the lens material end surfaces returns to normal pressure. Then the pressing stage 15 is again lowered and the flange of the mold 11 and the pressing stage are made closely contacted. Even if the molding pressure is made zero, the transfer surface 11b of the upper mold 11 and the transfer surface 12b of the lower mold 12 are left in close contact with the lens material. At this time, the volumes of the spaces 11b and 12b becomes much smaller than those of the spaces 11b and 12b immediately after the start of the heating & pressing step. Pressure is again applied to the pressing stage by the hydraulic pump, and the upper mold 11 starts to press the lens material. When the pressing is made through the total heating & pressing stroke, the heating & pressing step is completed. The viscosity of the lens material at this time becomes 10⁹ poise. When the pressing is made through the total heating & pressing stroke, that is, at the completion of the heating & pressing step, there is a portion on the lens material to which the mold transfer surface was not completely transferred.

Then the cooling & pressing step follows. At the completion of the cooling & pressing step, the volumes of the spaces encircled by the transfer surfaces 11a, 12a and the lens material end surfaces become much smaller than those of the spaces 11b and 12b just before the start of the cooling & pressing step, or become almost zero.

In the next, the cooling step is made down to the room temperature. Even if the small concave remains on the lens material surface at the completion of the heating & pressing step, due to the flow from the lens material shrinkage during the cooling & pressing step, the spaces 11b and 12b are completely eliminated. In addition, if the coefficient of linear expansion of the lens material is 50 x 10⁻⁷/deg or more, since the flow quantity of the lens material becomes larger, the concave on the lens surface easily becomes zero. Then, the pressure application is stopped and the molding pressure is made zero. When the temperature of the lens inside the molds becomes the room temperature, the molds are opened and the lens is taken out.

In this embodiment, since the pressing stage and the upper mold flange are not fixed, and the molding is made under the conditions in which the molds always contact the material, the transfer characteristics are extremely improved. In the embodiment, the molding pressure was once made zero during the heating & pressing step. However, since only by reducing pressure depending on the scale of the lens material, the pressure inside the spaces 11b and 12b returns to the normal pressure, only pressure reduction can be selected. Besides, as shown in Fig. 2, it is unnecessary for the barrel mold adjusting the lens thickness to be in contact with the upper and lower molds. The following method can be selected: by incorporating a ring-like barrel mold or a block-like spacer outside the upper and lower mold flanges 11c and 12c which are in close contact with the pressing stage 15 and the molding stage 16, the gap between the pressing stage and the molding stage is adjusted. Besides, even if a mold transfer method in which the cooling & pressing step, the cooling step, etc. are respectively transferred into a separate stage, is adopted, a lens with completely the same performance can be obtained. By applying, during the molding on the molds, the pressing force necessary for generating, inside the space encircled by the mold transfer surface and the lens material end surface, minimum compressed air pressure necessary for releasing the pressure inside the space encircled by the mold transfer surface and the lens material end surface can be made small. In this embodiment, the molding pressure of 2 kg/mm² or more was used.

### Embodiment 4

The constitution of the molding device is the same as that of Embodiment 1. A molding method for glass material by using the molding device is explained. The general molding profile is the same as the one mentioned in Embodiment 1. A lens material is cylindrical as shown in Fig. 5 and its end surface is mirror-like. In the present embodiment, a cylindrical optical glass SF-8 (glass transition point; 420°C, coefficient of linear expansion; 90 x 10⁻⁷/deg at 100°C 300°C) with 5 mm in diameter x 7 mm in length is employed.

The pre-heating step is all the same as that of Embodiment 1. Then, pressure is applied to the pressing stage by a hydraulic pump, and the upper mold 11 starts to press the lens material. Pressure at this time is preferably 2 kg/mm² or more. When the upper mold 11 descends to a specified level, the pressing stage 15 stops. This is a heating and pressing step. Here, the molding pressure is once made zero, and the transfer surface 11a of the upper mold and the lens material are separated by raising the pressing stage 15. Viscosity of the lens material at this time becomes 10⁹ poise. When the upper mold 11 descends to the specified level, there is a part of incomplete transfer surface on the lens material to which the mold transfer surface is transferred, since pressure inside the spaces 11b and 12b encircled by the mold transfer surfaces 11a, 12a and the lens material is positive. When the molding pressure is made zero, positive pressure inside the spaces 11b and 12b returns to normal pressure.

Next, the pressing stage 15 is again lowered, and the cooling and pressing step starts by closely contacting the transfer surface 11b of the upper mold 11 and the transfer surface 12b of the lower mold 12 with the lens material. Namely, by turning off the energization of the heating sources built in the pressing stage 15 and the molding stage 16, pressure of 2 kg/mm² or more is applied to the pressing stage by the pressure pump. After cooling and pressing down to 430°C, the pressure application is stopped, and the molding pressure is made zero. At this time, the lens material and the molds are left in close contact with each other.

Then, the cooling step follows. Namely, until the lens temperature within the mold reaches to the room temperature, the lens material and the mold is left close contacted. And then, the pressing stage is raised, the mold is opened and the lens is taken out. Though the spaces 11b and 12b become further small and remain as the concave on the surface of lens material, the size has no effect on the lens performance. Furthermore, if a coefficient of linear expansion of the lens material is equal to or more than 50 x 10⁻⁷/deg, the concave on the lens surface is almost eliminated since the flow of the glass material becomes further large.

In the embodiment, though the molding pressure is made zero at the point of finishing the heating and pressing step, but depending on the lens material size, a pressure reduction can only be selected, as the spaces 11b and 12b return to normal pressure. In addition, after finishing the heating and pressing step, it can be selected that the pressing force is made zero under condition that the lens material is not separated from the molds left close contacted. Furthermore, though after finishing a cooling and pressing step in the embodiment the lens material and the molds are left close contacted, the cooling step can follow under condition that the upper mold 11 and lens are separated by raising the pressing stage.

### Embodiment 5

The constitution of the molding device is the same as that of Embodiment 2. A molding method of glass material by the molding device is explained.
The material is a cylindrical optical glass SF-8 (glass transition point; 420°C, coefficient of linear expansion; 90 x 10⁻⁷/deg at 100°C - 300°C) with 8 mm in diameter x 10 mm in length. This material is vertically supplied to the transfer surface 12a of the lower mold 12, and the upper mold is inserted to match the barrel mold, and contacted with the lens material. The molding method is almost similar to that of Embodiment 4. However, in this embodiment, also when the molding pressure is made zero after the completion of the heating & pressing step, the mold transfer surface and the lens material are left in contact. This point is different from Embodiment 4.

### Embodiment 6

The molding device is the same as that of Embodiment 1. A lens material is cylindrical as shown in Fig. 5 and its end face is mirror-like. In the present embodiment, a cylindrical optical glass SF-8 (glass transition point; 420°C, coefficient of linear expansion; 90 x 10⁻⁷/deg at 100°C - 300°C) 5.5 mm in diameter x 7 mm in length is employed. The pre-heating step is the same as Embodiment 1. When the lens material temperature is 530°C after finishing the pre-heating step, viscosity of the lens material becomes 10¹⁰ poise.

And then, pressure is applied to the pressing stage by a hydraulic pump, and the upper mold 11 begins to press the lens material. Pressure at this time is preferably 2 kg/mm² or more. When the upper mold 11 descends to a predetermined level, the pressing stage 15 stops. This is a heating and pressing step. A viscosity of the lens material at this time becomes 10⁹ poise. When the upper mold 11 descends to the specified level, there is a part of incomplete transfer surface on the lens material to which the mold transfer surface is transferred, since the spaces 11b and 12b encircled by the mold transfer surfaces 11a, 12a and the lens material have a positive pressure.

Then, the cooling and pressing step follows. Namely, the energization for heating sources built-in the pressing stage 15 and the molding stage 16 is stopped, and pressure application of 2 kg/mm² or more is continued by using a pressure pump, similarly to the heating and pressing step. During the cooling & pressing step, after a specified time elapse the molding pressure is once made zero, and the transfer surface 11a of the upper mold 11 and the lens material are separated from each other by raising the pressing stage 15. When said pressure is made zero, positive pressure inside the spaces 11b and 13b returns to normal pressure. Next, by again lowering the pressing stage 15, the transfer surface 11b of the upper mold 11 and the transfer surface 12b of the lower mold 12 are made in contact with the lens material. At this time, the spaces 11b and 12b have a considerably less volume than the spaces 11b, 12b during the heating and pressing step. In addition, the lens surface is not affected by swallowed bubbles generating when the transfer surface 11a of the upper mold is separated from the lens material in order to release the pressure during the cooling & pressing step in which the viscosity is somewhat higher than that during the heating.

Next, after performing the cooling and pressing down to 430°C, the pressure application is stopped and the molding pressure is again made zero. At this time, the lens material and the mold are kept closely contacted. And then, the cooling step follows. Namely, until the lens temperature within the mold reaches to room temperature, the lens material and the molds are left close contacted. And then, the pressing stage is raised and by opening the mold, the lens is taken out. Although the spaces 11b and 12b encircled by the mold transfer surfaces 11a, 12a and the lens material end faces, due to flow by shrinkage of glass material during cooling, become further small and remain as the concave on the lens material surface, its size has no effect on the lens performance. Furthermore, if coefficient of linear expansion of the lens material is equal to or more than 50 x 10⁻⁷/deg, the concave on the lens surface is almost eliminated due to larger flow quantity of glass material.

In the above embodiment, though the molding pressure is made zero during the cooling and pressing step, but depending on the lens material size or shape only reducing the pressure can be selected. Besides the transfer characteristics can be further improved by making the pressing force reduced or zero under conditions that during cooling the upper mold and the lens material are not separated and are left closely contacted. Though the pressure was once made zero during the cooling & pressing step, after the specified time elapse during the cooling and pressing step, the effect becomes even stronger if it is performed twice or more depending on the lens shape or dimension. Besides, according to the shrinkage in cooling and pressing step, a timing for releasing the pressure can be set. Besides, although in the present embodiment the lens material and the mold were kept in close contact with each other after finishing the cooling and pressing step, a cooling step can follow in a state that the upper mold 11 and the lens are separated from each other by raising the pressing stage.

### Embodiment 7

The molding device is the same as that of Embodiment 2. The lens material is a cylindrical optical glass SF-8 (glass transition point; 420 °C, coefficient of linear expansion; 90 x 10⁻⁷/deg at 100°C - 300°C) with 8 mm in diameter x 10 mm in length. The molding method is the same as that of Embodiment 6 except that the mold transfer surfaces and the lens material are always kept in contact with each other during the cooling & pressing step even when the molding pressure is made zero or reduced. Therefore, a very precise lens can be made since during the molding the molds and the material are always kept contacted eath other.

### Embodiment 8

The constitution of the molding device is the same as that of Embodiment 1. The lens material is cylindrical as shown in Fig. 5 and its end face is mirror-like. In the present embodiment, a cylindrical optical glass SF-6 (glass transition point; 421°C, coefficient of linear expansion; 97 x 10⁻⁷ /deg at 100°C - 300°C) with 5.5 mm in diameter x 5.5 mm in length is employed. The pre-heating step is the same as that of Embodiment 1. Viscosity of the glass material becomes 10¹⁰ poise when the temperature of the lens material becomes 530°C.

And then, pressure is applied to the pressing stage by using a hydraulic pump, and the upper mold 11 starts to press the lens material. That is, the heating and pressing step starts from this time. Pressure at this time is preferable to be 2 kg/mm² or more. During the heating and pressing step, the molding pressure is once made zero after a specified time elapse, and the transfer surface 11a of the upper mold 11 and the lens material are separated from each other by raising the pressing stage. When the said pressure is made zero, the pressure inside the spaces 11b and 12b encircled by the mold transfer surfaces 11a, 12a and the lens material, returns to normal pressure. Next, by again lowering the pressing stage 15, the transfer surface 11b of the upper mold 11 and the transfer surface 12b of the lower mold 12 are made in close contact with the lens material. At this time, volume of the spaces 11b and 12b becomes considerably smaller than that of the spaces 11b and 12b just after the start of the heating and pressing step. With a pressurization of the pressing stage by using the hydraulic pump, the mold 11 starts to press the lens material. When the upper mold 11 descends to a specified level, the pressing stage stops. This is a heating and pressing step. Viscosity of the lens material at this time becomes 10⁹ poise. At the time of finishing the heating and pressing step, the lens material has a closed space with a part of incomplete transfer surface to which the metal mold transfer surface is transferred and has high internal pressure caused by the molding pressure.

At the time of finishing the heating and pressing step, the molding pressure is once made zero, and, the transfer surface 11a of the upper mold 11 and the lens material are separated from each other by raising the pressing stage 15. Just before the said pressure is made zero, positive pressure inside the spaces 11b and 12b returns to normal pressure. Next, by again lowering the pressing stage 15, the transfer surface 11b of the upper mold 11 and the transfer surface 12b of the lower mold 12 are made in close contact with the lens material. The spaces 11b and 12b at this time, have a further less volume or becomes almost zero than that of the spaces 11b and 12b at the completion of the heating and pressing step.

Next, the cooling and pressing step follows. That is, turning off the energization of the heating sources built in the pressing stage and the molding stage is made, and pressure of 2 kg/mm² or more is applied to the pressing stage by using a pressure pump as in the case of the heating and pressing step. After performing cooling and pressing down to 430°C, the pressure application is stopped and the molding pressure is again made zero. At this time the lens material and the molds are kept contacted.

Then, the cooling step follows. Namely, until the lens temperature within the mold reaches to room temperature, the lens material and the molds are kept closely contacted. And then, by raising the pressing stage and the mold is opened to take out the lens. The spaces 11b and 12b become almost zero with releasing the molding pressure during the heating and pressing step and after the step. In a rare case, the concave on the lens material end face not having disappeared just before the start of the cooling and pressing step, becomes further small and the mold can be almost perfectly transferred due to the shrinkage of the glass material during the cooling and pressing step. Besides, if a coefficient of linear expansion of the lens material is equal to or more than 50 x 10⁻⁷/deg, the concave on the lens surface is apt to disappear since the flow quantity can enough be obtained due to the shrinkage of the glass material.

In the above embodiment, though the molding pressure was once made zero during the heating and pressing step and at the completion of its step, but depending on the lens material size or shape, pressure reduction can only be selected during the heating & pressing step and at the completion of the step, as the pressure inside the spaces 11b and 12b returns to normal pressure. Furthermore, it is desirable in view of heat distribution of the lens material and prevention of swallowed air generation that the molding pressure is made zero or reduced while the upper mold 11 and the lens material are closely contacted. As in the present embodiment, if the upper mold 11 and the lens material are separated from each other when the molding in case of zero pressure is made zero, air is swallowed and a small concave on the lens material surface especially on good surface transferring the mold transfer surface sometimes generates. But by reducing the molding pressure to zero, the concave completely disappears or becomes small size having no effect on the lens performance. In the present embodiment, though the molding pressure was once made zero after a specified time elapse during the heating and pressing step and at finishing time of its step, the effect is made large if it is performed twice or more depending on the lens shape and dimension.

### Embodiment 9

The molding device is the same as that of Embodiment 2. The material is a cylindrical optical glass SF-8 (glass transition point; 420°C, coefficient of linear expansion; 90 x 10⁻⁷/deg at 100°C - 300°C) with 4 mm in diameter x 6 mm in length. The molding method is the same as that of Embodiment 8 except that in this embodiment, the mold transfer surfaces and the lens material are always in contact with each other during the molding, and a very precise lens can be made.

### Embodiment 10

The constitution of the molding device is the same as that of Embodiment 1. The lens material is cylindrical as shown in Fig. 5 and its end face is mirror-like. In the present embodiment, a cylindrical optical glass SF-8 (glass transition point; 420°C, coefficient of linear expansion; 90 x 10⁻⁷/°C at 100°C - 300°C) with 5 mm in diameter x 7 mm in length is employed. A preheating step is the same as that of Embodiment 1. Viscosity of the glass material becomes to 10¹⁰ poise when the temperature of the lens material becomes 530°C.

And then, with a pressurization of the pressing stage by using a hydraulic pump, the upper mold 11 starts to press the lens material. That is, the heating and pressing step starts from this time. Pressure at this time is preferably 2 kg/mm² or more. During the heating and pressing step, the molding pressure is once made zero after a specified time elapse, and, the transfer surface 11a of the upper mold 11 and the lens material are separated from each other by raising the pressing stage. When the said pressure is made zero, the positive pressure inside the spaces 11b and 12b encircled by the mold transfer surfaces 11a, 12a and the lens material, returns to normal pressure. Next, by again lowering the pressing stage 15, the transfer surface 11b of the upper mold 11 and the transfer surface 12b of the lower mold 12 are made in contact with the lens material. At this instant, the spaces 11b and 12b have a considerably smaller volume than that of the spaces 11b and 12b just after the start of the heating and pressing step. Pressure is again applied to the pressing stage by using a hydraulic pump, and the upper mold 11 starts to press the lens material. When the upper mold 11 descends to a specified level, the pressing stage 15 stops. This is the heating and pressing step. Viscosity of the lens material at this time becomes 10⁹ poise. At the time of finishing the heating and pressing step, the lens material has a part of incomplete transfer surface to which the mold transfer surface is transferred.

Next, the cooling and pressing step follows. That is, turning off the energization for the heating sources built in the pressing and molding stages is made and application of pressure of 2 kg/mm² or more is continued from a pressure pump as in the case of the heating and pressing step. During the cooling and pressing step, the molding pressure is once made zero after a specified time elapse, and the transfer surface 11a of the upper mold 11 and the lens material are separated from each other by raising the pressing stage. The spaces 11b and 12b, which had positive pressure just before said pressure is made zero, return to have normal pressure. Next, by again lowering the pressing stage 15, the transfer surface 11b of the upper mold 11 and the transfer surface 12b of the lower mold 12 are made in close contct with the lens material. At this time, volumes of the spaces 11b and 12b become considerably smaller than those of the spaces 11b and 12b at finishing the heating and pressing step. Besides, the lens surface does not suffer from swallowed bubbles generated when the transfer surface of the upper mold 11 was separated from the lens material in order to release the pressure during the cooling and pressing step in which the viscosity is somewhat higher than that during heating.

Next, after performing cooling and pressing down to 430°C, the pressure application is stopped, and the molding pressure is again made zero. The lens material and the mold is kept closely contacted at this time. Then, the cooling step follows. Namely, until the lens temperature within the mold reaches to room temperature, the lens material and the molds are left closely contacted. By raising the pressing stage, the mold is opened to take out the lens. The spaces 11b and 12b become further smaller, due to flow from the shrinkage of the glass material during the cooling and pressing step. Though there is a case in which a concave remains on the lens material surface, its size has no effect on the lens performance. Besides, if coefficient of linear expansion of the lens material is equal to or more than 50 x 10⁻⁷/deg, the concave on the lens surface becomes almost zero since the flow quantity following after the shrinkage of the glass material becomes further large.

In the above embodiment, though the molding pressure is once made zero during the heating and pressing step and the cooling and pressing step, but depending on the lens material size or shape, reducting the pressure can only be selected, as the spaces 11 and 12b return to have normal pressure only by reducing the pressure during both steps. In addition, it is desirable in view of heat distribution of the lens material and prevention of swallowed air generation that the molding pressure is made zero or reduced under conditions that the upper mold 11 and the lens material are left closely contacted. As in this embodiment, if the upper mold 11 is separated from the lens material when the molding pressure is made zero, swallowed air generates and the small concave sometimes generates on the lens material, especially on the good surface transfering the metal mold transfer surface. But, by making the molding pressure zero during the cooling and pressing step, the concave disappears completely or its size has no effect on the lens performance. In this embodiment, though the molding pressure was once made zero after a specified time elapse during the heating and pressing step and during the cooling and pressing step, more larger effect can be expected by performing the pressure reduction twice or more depending on the lens shape and dimension. Besides, according to the shrinkage during cooling and pressing, timing for releasing the pressure can be selected. Furthermore, although in the present embodiment the lens material and the mold were kept in close contact, the cooling step can follow under the conditions that the lens and the upper mold 11 are separated by raising the pressing stage.

### Embodiment 11

The molding device is the same as that of Embodiment 2. A cylindrical optical glass SF-8 (glass transition point; 420°C, coefficient of linear expansion; 90 x 10⁻⁷/deg at 199°C - 300°C) with 8 mm in diameter x 10 mm in length is employed. The molding method is the same as that of Embodiment 10 except that, in the present embodiment, since the mold transfer surfaces and the lens material are always in close contact with each other, a higher performance lens can be obtained.

### Embodiment 12

The molding device is all the same as that of Embodiment 1. The material is a cylindrical optical glass SF-8 (glass transition point; 420°C, coefficient of linear expansion; 90 x 10⁻⁷/deg at 100°C - 300°C) with 8 mm in diameter x 10 mm in length The preheating step is the same as that of Embodiment 1. Viscosity of the glass material becomes 10¹⁰ poise when the temperature of the glass material becomes 530°C after finishing the pre-heating step. And then, with a pressurization of pressing stage, the upper mold 11 starts to press the lens material. Pressure at this time is preferably 2 kg/mm² or more. The following stroke is called a total heating & pressing stroke; a gap between the upper mold 11 and the barrel mold 14 which generates when the lens material was supplied into the space encircled by the molding molds composed of the upper and lower molds, the barrel mold positioning the upper and lower-molds and said upper, lower and barrel molds, is completely eliminated and made closely contacted. After the pressing is made through the total heating and pressing stroke, application of pressure is stopped, and the molding pressure is once made zero and by separating the upper mold 11 by raising the pressing stage 15. Viscosity of the glass material at this time becomes 10⁹ poise. As the spaces 11b and 12b encircled by the mold transfer surfaces 11a, 12a and the lens material end faces have positive pressure when the press was made through the total heating & pressing stroke, the lens material has a part of incomplete transfer surface to which the mold transfer surface is transferred. And the spaces 11b and 12b have positive pressure at this time, return to have normal pressure.

Next, after again making the pressing stage 15 in close contact with the upper mold 11, the cooling and pressing is performed down to 430°C. Application of pressure is once stopped during the cooling and pressing step and the molding pressure is made zero by raising the pressing stage to separate the upper mold. Next, by again lowering the pressing stage 15, the transfer surface 11b of the uppwe mold 11 and the transfer surface 12b of the lower mold are made in close contact with the lens material. At this time the transfer surfaces 11a and 12a are completely transferred to the lens material, and the spaces 11b and 12b just before the start of the cooling and pressing step almost become zero. Though due to flow of the glass material in the cooling and pressing step the spaces 11b and 12b become further smaller and remain as the concave on the lens material surface, its size has no effect on the lens performance. Furthermore, if coefficient of linear expansion of the lens material is equal to or more than 50 x 10⁻⁷/deg, the concave on the lens surface almost disappears due to further large flow quantity of glass material. And then, application of pressure is stopped and the molding pressure is made zero. When the lens temperature within the mold reaches to room temperature, the mold is opened and the lens is taken out.

In the above embodiment, the molding pressure is made zero after the pressing is completed through the total heating and pressing stroke and during the cooling and pressing. But, as the pressure inside the spaces 11b and 12b returns to normal pressure only by reducing the pressure at the time of pressing the total heating and pressing stroke and during the cooling and pressing, pressure reduction can only be selected according to the lens material size. Besides, it is not necessary that the barrel mold 14 to regulate the lens thickness contacts with the upper and lower molds as shown Fig. 1, and it can also be selected that a ring-like barrel mold or a block-like spacer is installed on the outside of the upper and lower flange 11c and 12c closely contacting the pressing stage 15 and the molding stage 16.

### Embodiment 13

The molding device is the same as that of Embodiment 2. The lens material is the same material as was employed in Embodiment 12. The pre-heating step is the same as that of Embodiment 2. The heating and pressing step finishes when the press is made through the total heating and pressing stroke, after finishing the pre-heating step. Viscosity of the lens material at this time becomes 10⁹ poise. At the time of the completion of pressing the total heating and pressing stroke, namely, at the completion of the heating and pressing step, the lens material has a part of incomplete transfer surface to which the mold transfer surface is not transferred. After a specified time elapse after finishing the heating and pressing step, the molding pressure is once made zero and the pressing stage 15 is separated from the upper flange 11c by raising it. Positive pressure inside the spaces 11b and 12b encircled by the mold transfer surfaces 11a, 12a and the lens material end faces just before making the said pressure zero, returns to the normal pressure. Next, by again lowering the pressing stage 15, the flange of the upper mold 11 is made in close contact with the pressing stage 15. Also when the molding pressure is made zero, the transfer surface 11b of the upper mold 11 and the transfer surface 12b of the lower mold 12 are kept in close contact with the lens material as it is. At this time, the spaces 11b and 12b have a considerably less volume than before.

Next, the cooling and pressing step follows. During the cooling and pressing step, after a specified time elapse the molding pressure is once made zero and the pressing stage 15 is separated from the upper flange 11c by raising it. Positive pressure inside the spaces 11b and 12b just before making the said pressure zero, returns to normal pressure. Next, the pressing stage 15 is again lowered, and made in close contact with the mold flange 11c. At this time, the upper mold flange 11c is kept in close contact with the end face of the barrel mold 14. At this time, the spaces 11b and 12b have a considerably small volume than that of the spaces 11b and 12b just before the start of the cooling and pressing step, or the spaces become almost zero.

Next, the cooling and pressing down to 430°C is carried out. Though there is a rare case in which a small concave on the lens material surface remains after releasing the molding pressure during cooling and pressing step, the spaces 11b and 12b are completely eliminated due to the flow quantity caused by the shrinkage of the lens material during the cooling and pressing step. Furthermore, if coefficient of linear expansion of the lens material is equal to or more than 50 x 10⁻⁷/deg, the concave on the lens surface is apt to disappear since the flow quantity can sufficiently be obtained due to the shrinkage of the lens material. And then, the molding pressure is made zero by stopping application of pressure. When the lens temperature within the mold reaches to room temperature, the mold is opened to take out the lens.

In this embodiment, transfer characteristics are remarkably improved since the pressing stage and the upper mold flange are not fixed and the molding is performed under conditions that the molds always close contacts the lens material.

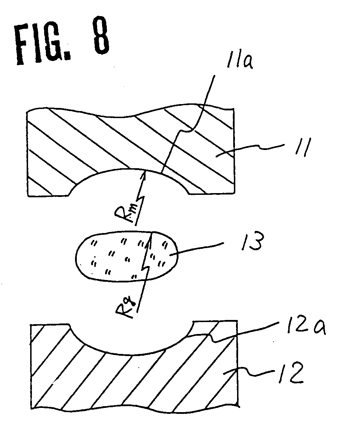

In the above embodiment, the molding pressure was once made zero at the time of the completion of the heating and pressing step and during cooling and pressing step. However, as the pressure inside the spaces 11b and 12b returns to the normal pressure only by reducing the pressure, pressure reduction can only be selected depending on the lens material size. When a relationship between a radius Rm of the mold transfer surface and a radius Rg of the lens material end face is expressed by Rg > Rm as shown in Fig. 8, the closed space encircled by the mold transfer surface and the lens material end face generates. Therefore, if selected, the molding method in the present embodiment has a remarkable effect. And it is very effective in case of the cylindrical lens material as is shown in Fig. 5 and employed in the present embodiment. In addition, the barrel mold 4 to regulate the lens thickness need not necessarily contact the upper and lower molds as shown in Fig. 2. A method adjusting a gap between the pressing stage 15 and the molding stage 16 can also be selected, in which a ring-like barrel mold or a block-like spacer is installed on the outside of the upper and lower flange 11c and 12c closely contacting the pressing stage 15 and the molding stage 16. Besides, the same performance lens is made by adopting the mold transfer method in which the cooling and pressing step and the cooling step are transferred to a separate stage. By applying, on the metal mold, the molding force necessary for generating, inside the space, encircled by the mold transfer surface and the lens material end face, minimum compressed air pressure necessary for releasing pressure inside the space, the space can be made small. The present embodiment was carried out using the molding pressure of 2 kg/mm² or more.

## Claims

1. A lens molding method for press-molding a body of lens material placed in a space between mold surfaces of a pair of upper and lower molds by applying a molding pressure to the pair of molds to produce a lens, comprising:
a preheating step for heating the body of lens material placed in the space between the mold surfaces of the pair of molds until the temperature of said body rises up to a first predetermined temperature;
a heating and pressing step for applying the molding pressure to the pair of molds having the body of lens material placed therebetween while keeping the temperature of said body at the first predetermined temperature thereby to mold said body into a lens-form body;
a cooling and pressing step for applying the molding pressure to the pair of molds having the lens-form body placed therebetween while cooling the lens-form body until the temperature of the lens-form body lowers down to a second predetermined temperature to obtain a final lens product; and
a taking out step for taking out the final lens product from the space between the pair of molds after the product has further cooled down,
characterized in that the molding pressure is reduced or made zero at least once at a predetermined timing during at least one of the heating and pressing step and the cooling and pressing step so that a compressed air pressure generated inside a space between each of the mold surfaces of the pair of molds and the body of lens material is released by its own pressure from the space between each of the mold surfaces of the pair of molds and the body of lens material.

2. A method according to claim 1, wherein when the molding pressure is reduced or made zero during the heating and pressing step the body of the lens material is kept in contact with each of the molding surfaces of the pair of upper and lower molds.

3. A method according to claim 1, wherein a relationship between a radius Rm of the molding surface of each of the pair of molds and a radius Rg of an end surface of the body of lens material is expressed by Rg > Rm.

4. A method according to claim 1, wherein the body of lens material is a cylindrical body.

5. A method according to claim 1, wherein the press-molding is performed under such a condition that the upper and lower molds are always in contact with the lens material from the beginning of the preheating step to the end of the cooling and pressing step.

6. A method according to claim 1, wherein the molding pressure is reduced or made zero at least once during the heating and pressing step.

7. A method according to claim 1, wherein the molding pressure is reduced or made zero at least once during the heating and pressing step and at least once immediately after the end of the heating and pressing step during the cooling and pressing step.

## Patentansprüche

1. Ein Linsenformungsverfahren zum Preßformen eines Körpers aus Linsenmaterial, der in einen Raum zwischen Formoberflächen eines Paares einer oberen und unteren Form angeordnet wird, indem ein Formungsdruck auf das Paar von Formen aufgebracht wird, um eine Linse zu erzeugen, umfassend:
einen Vorheizschritt zum Heizen des Körpers aus Linsenmaterial, der in dem Raum zwischen den Formoberflächen des Paares von Formen angeordnet ist, bis die Temperatur des genannten Körpers auf eine erste, vorbestimmte Temperatur ansteigt,
einen Heiz- und Preßschritt, um den Formungsdruck auf das Paar von Formen aufzubringen, wobei der Körper des Linsenmaterials dazwischen angeordnet ist, während die Temperatur des genannten Körpers auf der ersten, vorbestimmten Temperatur gehalten wird, wodurch der genannte Körper zu einen Linsenformkörper geformt wird,
einen Abkühl- und Preßschritt, um dem Formungsdruck auf das Paar von Formen aufzubringen, wobei der Linsenformkörper dazwischen angeordnet ist, während der Linsenformkörper abkühlt, bis die Temperatur des Linsenformkörpers auf eine zweite, vorbestimmte Temperatur absinkt, um ein endgültiges Linsenprodukt zu erhalten, und
einen Herausnahmeschritt zum Herausnehmen des endgültigen Linsenproduktes aus dem Raum zwischen dem Paar von Formen nachdem das Produkt weiter abgekühlt ist,
dadurch gekennzeichnet, daß der Formungsdruck wenigstens einmal zu einem vorbestimmten Zeitpunkt während wenigstens des Heiz- und Preßschrittes oder des Abkühl- und Preßschrittes verringert oder auf null gebracht wird, so daß ein Verdichtungsluftdruck, der innerhalb eines Raumes zwischen jeder der Formoberflächen des Paares von Formen und dem Körper aus Linsenmaterial erzeugt wird, durch seinen eigenen Druck aus dem Raum zwischen jeder der Formoberflächen des Paares von Formen und dem Körper aus Linsenmaterial freigesetzt wird.

2. Ein Verfahren gemäß Anspruch 1, bei dem, wenn der Formungsdruck während des Heiz- und Preßschrittes verringert oder zu null gemacht wird, der Körper aus Linsenmaterial in Berührung mit jeder der Formungsoberflächen des Paares aus oberer und unterer Form gehalten wird.

3. Ein Verfahren gemäß Anspruch 1, bei dem eine Beziehung zwischen einem Radius Rm der Formungsoberfläche von jeder der Form des Paares und einem Radius Rg einer Endoberfläche des Körpers aus Linsenmaterial durch Rg > Rm ausgedrückt wird.

4. Ein Verfahren gemäß Anspruch 1, bei dem der Körper aus Linsenmaterial ein zylindrischer Körper ist.

5. Ein Verfahren gemäß Anspruch 1, bei dem das Preßformen unter einer solchen Bedingung durchgeführt wird, daß die obere und die untere Form stets mit dem Linsenmaterial von Beginn des Vorheizschrittes bis zum Ende des Abkühl- und Preßschrittes in Berührung stehen.

6. Ein Verfahren gemäß Anspruch 1, bei dem der Formungsdruck wenigstens einmal während des Heiz- und Preßschrittes verringert oder zu null gemacht wird.

7. Ein Verfahren gemäß Anspruch 1, bei dem der Formungsdruck wenigstens einmal während des Heiz- und Preßschrittes und wenigstens einmal unmittelbar nach dem Ende des Heiz- und Preßschrittes während des Abkühl- und Preßschrittes verringert oder zu null gemacht wird.

## Revendications

1. Procédé de moulage de lentille, pour mouler à la presse un corps en matériau à lentille placé dans un espace entre des surfaces de moulage d'une paire de moules supérieur et inférieur en appliquant une pression de moulage à la paire de moules afin de produire une lentille, comprenant :
- une étape de préchauffage pour chauffer le corps en matériau à lentille placé dans l'espace entre les surfaces de moulage de la paire de moules jusqu'à ce que la température dudit corps s'élève jusqu'à une première température prédéterminée ;
- une étape de chauffage et de pressage pour appliquer la pression de moulage à la paire de moules tandis que le corps en matériau à lentille placé entre ceux-ci, tout en maintenant la température dudit corps à la première température prédéterminée afin de mouler ledit corps en un corps en forme de lentille ;
- une étape de refroidissement et de pressage pour appliquer la pression de moulage à la paire de moules tandis que le corps en forme de lentille est placé entre ceux-ci tout en refroidissant le corps en forme de lentille jusqu'à ce que la température du corps en forme de lentille s'abaisse jusqu'à une seconde température prédéterminée afin d'obtenir une lentille finale ; et
- une étape d'enlèvement pour enlever la lentille finale de l'espace entre la paire de moules après que la lentille ait poursuivi son refroidissement,
caractérisé en ce que l'on réduit ou l'on annule la pression de moulage au moins une fois à un moment prédéterminé pendant une étape au moins parmi l'étape de chauffage et de pressage et l'étape de refroidissement et de pressage, de sorte qu'une pression d'air comprimé produite à l'intérieur d'un espace entre chacune des surfaces de moulage de la paire de moules et le corps en matériau à lentille est relâchée par sa propre pression hors de l'espace entre chacune des surfaces de moulage de la paire de moules et le corps en matériau à lentille.

2. Procédé selon la revendication 1, dans lequel ledit corps en matériau à lentille est maintenu en contact avec chacune des surfaces de moulage de la paire de moules supérieur et inférieur lorsqu'on réduit ou qu'on annule la pression de moulage pendant l'étape de chauffage et de pressage.

3. Procédé selon la revendication 1, dans lequel la relation entre le rayon Rm de la surface de moulage de chaque moule de la paire de moules, et le rayon Rg d'une surface d'extrémité du corps en matériau à lentille est exprimée par Rg > Rm.

4. Procédé selon la revendication 1, dans lequel le corps en matériau à lentille est un corps cylindrique.

5. Procédé selon la revendication 1, dans lequel le moulage sous presse est mené sous une condition telle que les moules supérieur et inférieur sont toujours en contact avec le matériau à lentille depuis le commencement de l'étape de préchauffage jusqu'à la fin de l'étape de refroidissement et de pressage.

6. Procédé selon la revendication 1, dans lequel la pression de moulage est réduite ou annulée au moins une fois pendant l'étape de chauffage et de pressage.

7. Procédé selon la revendication 1, dans lequel la pression de moulage est réduite ou annulée au moins une fois pendant l'étape de chauffage et de pressage et au moins une fois immédiatement après la fin de l'étape de chauffage et de pressage pendant l'étape de refroidissement et de pressage.
